# EUROPÄISCHE PATENTSCHRIFT

(11) **EP 0 711 260 B1**
(45) Veröffentlichungstag und Bekanntmachung des Hinweises auf die Patenterteilung: **12.03.1997**
(21) Anmeldenummer: 94920969.6
(22) Anmeldetag: 05.07.1994
(51) Int. Cl.: C04B 22/14

(54) **VERWENDUNG VON BASISCHEN ALUMINIUMSULFATEN ALS ALKALIARME ABBINDEBESCHLEUNIGER FÜR ZEMENT**
USE OF BASIC ALUMINIUM SULPHATES AS ALKALI-POOR CEMENT ACCELERATING ADMIXTURES
UTILISATION DE SULFATES BASIQUES D'ALUMINIUM COMME ACCELERATEURS DE PRISE PEU ALCALINS POUR CIMENT

(30) Priorität: 24.07.1993 DE 4324959
(43) Veröffentlichungstag der Anmeldung: 15.05.1996
(73) Patentinhaber: Giulini Chemie GmbH, D-67029 Ludwigshafen (DE)
(72) Erfinder: HELMBOLDT, Otto, D-67071 Ludwigshafen (DE); POTENCSIK, Istvan, D-68169 Mannheim (DE); BREKER, Johannes, D-67067 Ludwigshafen (DE); SEDELIES, Reinhold, D-67105 Schifferstadt (DE); ROGGENKAMP, Detlev, D-67071 Ludwigshafen (DE)
(86) Internationale Anmeldenummer: EP9402190
(87) Internationale Veröffentlichungsnummer: WO9503257

(56) Entgegenhaltungen:
- EP-A- 0 110 847
- EP-A- 0 321 445
- DE-A- 2 018 129
- CHEMICAL ABSTRACTS, vol. 90, no. 26, 25. Juni 1979, Columbus, Ohio, US; abstract no. 206693v, Y. FJIHIRA ET AL 'Transparent aqueous aluminium sulphate from alumina sludge' Seite 162
- CHEMICAL ABSTRACTS, vol. 111, no. 6, 18. September 1989, Columbus, Ohio, US; abstract no. 102002e, S. SLANICKA 'Rapid-setting cement mixtures' Seite 302; in der Anmeldung erwähnt

## Beschreibung

Die vorliegende Erfindung betrifft die Verwendung von basischen Aluminiumsulfaten der allgemeinen Formel Al(OH)ₐ(SO₄)_{b}, wobei die Indices a und b folgende Bedingungen erfüllen:
a = 3 - 2 b und b = 0,05 - 0,4
als abbindebeschleunigender Zusatz für hydraulisch abbindende Baustoffe, insbesondere für Zement.

Zement ist ein essentieller Bestandteil des Betons. Da die meisten Betonierarbeiten in den Alpenländern, z.B. beim Tunnelbau in die Monate mit niedrigen Temperaturen fallen, ist es erforderlich die Abbinde,-Bearbeitungs- und Erhärtungszeit durch Zusatzmittel zu beeinflussen. Diese Zusatzmittel werden in erster Linie bei folgenden Problemen eingesetzt:
1. wenn früher entschalt werden soll
2. wenn der Beton bei kalten Außentemperaturen vor Frost geschützt werden soll
3. wenn die Abbindezeit von Beton verkürzt werden soll
4. wenn die Betonnachbehandlungszeit reduziert werden soll
5. und wenn ein schnellabbindender Spritzbeton hergestellt werden soll.

Insbesondere zur Herstellung von schnellabbindendem Spritzbeton bietet sich keine andere Alternative als die Verwendung abbindebeschleunigender Additive an.

Im Stand der Technik sind eine Reihe von abbindebeschleunigenden Additiven bekannt.

Die Additive werden nach ihrer Funktion unterteilt, wobei es auch übergreifende Effekte gibt:
1. abbindezeitverkürzende Zusatzmittel (set accelerating admixtures). Das sind solche Addditive, die den Zeitraum nach dem Mischen des Betons bis zum Übergang in die erstarrte Phase verkürzen.
2. Zusatzmittel, die die Erhärtungszeit verkürzen (hardening accelerating admixtures); das sind solche Zusatzmittel, die die Entwicklung der Frühfestigkeit von Beton beschleunigen, mit oder ohne Einfluß auf die Abbindezeit.

Im Rahmen der vorliegender Erfindung werden hier Verbindungen vorgestellt, die vorzugsweise auf die im Punkt 1 genannten Vorgänge Einfluß nehmen, d.h. es sind Verbindungen, die den Zeitraum nach dem Mischen des Betons bis zum Übergang in die erstarrte Phase erheblich verkürzen. Sie werden im weiteren auch kurz nur als Abbindebeschleuniger (AS) genannt.

Als Abbindebeschleuniger sind im Stand der Technik bekannt:

Calciumchlorid, Natriumsilikate, Natriumhydrogencarbonat, Natriumbicarbonat, Natriumaluminate, Aluminiumsulfate, Calciumformiate, Triethanolamin (TEA), lösliche Alkalifluoride und Seignettesalz.

Es sind weiterhin auch Aluminiumhydroxide als AS bekannt, die entweder alleine oder in Mischung mit anderen Verbindungen verwendet werden.

So ist z.B. in der CA96:167570e und in der EP -0 026 262 B1 die Verwendung von Aluminiumhydroxid beschrieben.

In der EP-0 076 927 B1 wird ein alkalifreier und chloridfreier Abbindebeschleuniger beschrieben, der dadurch gekennzeichnet ist, daß er amorphes Aluminiumhydroxid in Mischung mit wenigstens einem wasserlöslichem Sulfat und/oder Nitrat und/oder Formiat enthält. Durch Abmischen des amorphen Aluminiumhydroxides mit wasserlöslichen Sulfaten, Nitraten und Formiaten der Erdalkali- und Übergangsmetalle wird der abbindebeschleunigender Effekt auf Zement gesteigert. Der Nachteil dieser Mischung wird jedoch darin gesehen, daß sie wasserlösliche Zusatzstoffe enthält, von denen bekannt ist, daß sie den Abbindevorgang des Zementes negativ beeinflussen. Außerdem sind diese Zusatzstoffe leicht auswaschbar.

Aus der FR-2031950 ist übrigens ebenfalls bekannt, Aluminiumsulfat alleine oder als Mischungsbestandteil zur beschleunigten Abbindung von Zement zu verwenden.

Aus der CS-257142 ist eine Zementmischung bekannt, die neben Zement, evtl. Wasser und/oder Füllstoff und/oder Zuschlagstoffen kalziniertes Aluminiumsulfat, hier bezeichnet als Zusatzstoff C, Spalte 6, 1. Abs. der deutschen Übersetzung. Der Zusatzstoff C wird hier erhalten durch Glühen bei 600 °C während 5 Stunden. Mittels RTG-Phasenanalyse wurde festgestellt, daß es sich bei diesem Stoff C weder um Al₂O₃ noch um Al-(OH)₃ handelt. Der Zusatzstoff C weist ein Molverhältnis von Al₂O₃ : SO₃ von 1: 2,367, d.h. S/Al=1,184 auf.

Nachteilig bei diesem Verfahren erweist sich die Tatsache, daß um zu diesem Produtkt zu gelangen, sehr lange bei hohen Temperaturen geglüht werden muß, was was in Bezug auf den Energieverbrauch ungünstig ist. Durch die Kalzination entsteht ausserdem ein Produkt, das inhomogen ist, und in seiner Wirkung als AS nicht reproduzierbare Ergebnisse liefert.

Es ist aus der DE-OS 21 22 710 auch bereits bekannt, ein kalziniertes Aluminiumsulfat als Abbindebeschleunigerkomponente einzusetzen, wobei auch hier bereits deutlich ist, daß die Kalzination sehr lange, nämlich 24 h bei 450-490 °C erfolgen muß, um eine geeignete Aluminiumsulfat Type zu erhalten.

Wie bereits oben ausgeführt, haben die im Stand der Technik bekannten AS oft Nachteile, die ihre Verwendung beschränkt. Im Falle von alkalischen AS z. B. Wasserglas oder Natriumaluminat, die beide auch im Naßspritzverfahren angewendet werden, besteht der Nachteil darin, daß ein relativ hoher Aufwand an Arbeitsschutz erforderlich ist. Reste der genannten Stoffe aus den Maschinen auf der Baustelle können in die Umgebung gelangen ohne gezielte Neutralisation, was eine Beeinträchtigung vor allem der Umwelt zur Folge hat. Zusatzstoffe, wie Natriumsilikate, sind zwar wirksame Abbindebeschleuniger, bewirken jedoch eine schlechte Endfestigkeit des Betons. Calciumchlorid bzw. chloridhaltige AS haben eine hohe Korrosivität in Betonteilen zur Folge und sind deshalb nicht geeignet.

Es bestand also das Bedürfnis nach AS, die die obengenannten Nachteile nicht aufweisen, alkaliarm sind, die Abbindung beschleunigen und gleichzeitig die Druckfestigkeit des Betons nicht verschlechtern.

Die Aufgabe konnte überraschenderweise durch die Verwendung von basischen Aluminiumsulfaten mit der allgemeinen Formel Al(OH)ₐ (SO₄)_{b} gelöst werden, wobei die Indices die Bedingungen
b = 0,05 - 0,4 und a = 3 - 2 b erfüllen.

Zur Herstellung der erfindungsgemäßen basischen Aluminiumsulfate hat sich eine Parallelfällung aus aluminiumhaltigen Lösungen bei einer Temperatur vorzugsweise unter 60 °C bewährt. Obwohl die Fällung scheinbar einfach ist, so ist doch die Einhaltung der Reihenfolge der Zugabe der Komponenten, der Temperatur und des pH-Wertes von Bedeutung, denn nur dadurch ist es gewährleistet, daß sich eine erfindungsgemäß geeignete Type bildet.

Die Parallelfällung kann mit technischen Natriumaluminatlösungen und einer saueren Komponente vorgenommen werden. Es ist aber auch möglich von einer saueren aluminiumhaltigen Komponente z.B. Aluminiumsulfat auszugehen. Wesentlich bei dem erfindungsgemäßen Verfahren ist es, daß der erforderliche Al-Gehalt des Fällungsproduktes sowohl durch die sauere, als auch durch die alkalische Komponente eingetragen werden kann.

Die Verwendung von Reststofflösungen, z. B. aus dem Eloxalprozeß, ist ebenfalls möglich. Wird eine solche Lösung als Komponente eingesetzt, so kann das damit erhaltene Fällungsprodukt etwas Carbonat enthalten.

Die Einhaltung der Fällungsbedingungen ist ein wesentliches Kennzeichen der vorliegenden Erfindung. Es gibt je nach Fällungsbedingung zwar immer ein Fällungsprodukt, von dem man annehmen könnte, es hätte stets die gleiche Zusammensetzung. Nicht jedes Fällungsprodukt stellt jedoch ein erfindungsgemäßes amorphes basisches Aluminiumsulfat dar, das sich zur Abbindebeschleunigung von Zement eignet.

Es hat sich also als notwendig erwiesen, eine Testmethode zu entwikkeln, nach der die geeigneten Typen gefunden werden können. Als Kriterium für die im Sinne der Erfindung besonders vorteilhaften basischen Aluminiumsulfate wird deren Verhalten in dem für den Zementleim messbaren pH-Wert Bereich, bei etwa 13, angesehen.

Der Test ermöglicht die Unterscheidung zwischen erfindungsgemäß gefälltem Material (Beispiel 1) von anderen basischen Aluminiumsulfaten und -hydroxiden mit deutlich geringerer abbindebeschleunigender Wirkung.

Die erfindungsgemäß geeigneten Verbindungen zeigen eine charakteristische Löslichkeit in Alkalihydroxyd-Lösungen, was bei vorgegebenen Konzentrationen, (OH-Gehalt der Lösung, durch Zugabe der Komponente erreichter Al₂O₃-Gehalt) zu einem mehr oder weniger schnellen Absinken des pH-Wertes führt.

Der Test kann z.B in der folgenden Form ausgeführt werden:

In einem 150 ml Becherglas wird die 0,5 g Al₂0₃ entsprechende Menge der Komponente eingewogen. Mit dest. Wasser wird auf 50 g aufgefüllt. Die Mischung wird mit einem Ultra Turrax IKA T50 (1 min bei 3000 UpM ; Werkzeug G45F) homogenisiert. Die am Homogenisator verbleibende Paste wird mit insgesamt 49 g dest. Wasser in das Becherglas zurückgespült. Von der so erhaltenen Suspension wird nach 5 min Rühren mit einer Glaselektrode der pH-Wert gemessen. Anschließend werden in die gerührte Suspension 1 ml einer ca. 10 M NaOH pipettiert und 1 min nach der Alkali-Zugabe der pH-Wert erneut gemessen. Eine dritte pH-Messung erfolgt 60 min nach der Alkali-Zugabe. Die 1. pH-Messung zeigt, daß es sich bei den erfindungsgemäßen Stoffen um nicht bzw. kaum alkalisch reagierende Verbindugen handelt. Der pH-Wert liegt unter 9, bevorzugt bei 4,5 - 8,0.

Die 2. und 3. pH-Messung liefert das Entscheidungskriterium zwischen erfindunggsgemäß geeigneten bzw. weniger gut geeigneten Verbindungen. Gut geeignet sind also Verbindungen, bei denen der pH-Wert der Suspension vor der 2. Messung schnell mind. auf einen Wert von 11,8 abgefallen ist (bevorzugt 11,1 - 11,4) Die Differenz zwischen 2. und 3. Messung sollte 0,2 pH-Einheiten nicht überschreiten.

Bei ungeeigneten Verbindungen sinkt der Ausgangs pH-Wert (ca. 13.0 bei 1 ml 10 M NaOH auf 100 ml Wasser) nur langsam und liegt nach 1 min über 12.0. Die 3. Messung zeigt, daß sich z.B. kalzinierte Aluminiumsulfate vollkommen anders verhalten, als die erfindungsgemäßen Verbindungen.

Es ist insbesondere wichtig, daß das erfindungsgemäße amorphe basische Aluminiumsulfat sowohl in Form eines getrockneten und gemahlenen Feststoffes, als auch in Form einer mit Wasser angemaischten Suspension als AS verwendet werden kann.

Zur Herstellung der erfindungsgemäßen Verbindungen kann man nach folgendem Verfahren vorgehen, wobei dieses Verfahren die Erfindung nicht limitiert.

### Beispiel 1

In einem 5 l Becherglas werden 2 l Wasser vorgelegt. Bei RT wurden unter Rühren gleichzeitig eine verd. H₂SO₄ (8,71 Gew. % SO₄) und eine verd. Natriumaluminatlösung (5,5 % Na₂O, 4,0 Al₂O₃) innerhalb von 1 h so zudosiert, daß der pH-Wert im Bereich von 6,5 - 7,5 blieb. Nach einer Nachrührzeit von 40 min wurde die Suspension über eine Drucknutsche abfiltriert und anschließend mit H₂O ausgewaschen. Bezogen auf Trockensubstanz enthält das Produkt 53,0 Al₂O₃ und 13,4 % SO₄, das Molverhältnis von S/Al war 0,134 Ein Teil des Filterkuchens wurde mit Wasser unter Zusatz eines bekannten Verflüssigers z.B. Naphtalinformaldehydkondensatsulfonat-Ca-Salz, zu einer thixotropen, niederviskosen Flüssigkeit resuspendiert. Ein anderer Teil des Filterkuchens wurde in einem Umlufttrockenschrank bei 120 °C bis auf eine Restfeuchte von ca. 14 % abgetrocknet.

Die folgenden 2 Beispiele beinhalten erfindungsgemäße Materialien, die aus Reststofflösungen aus dem Eloxalprozeß hergestellt worden sind.

### Beispiel 2

Ein abgepresster Filterkuchen, der durch Neutralisationsfällung gemäß Beispiel 1 erhalten wurde, wurde in einem Hordentrockner auf eine Restfeuchtigkeit von 11 % abgetrocknet.

### Beispiel 3

Ein abgepresster Filterkuchen, der durch Neutralisationsfällung gemäß Beispiel 1 erhalten wurde, wurde zu einer ca. 10 % Feststoff enthaltenden Suspension angemaischt. Die Suspension wurde auf einem Sprühtrockner (Eintrittstemperatur 280 °C, Austrittstemperatur 80 °C) zu einem leicht fließendem Pulver mit einer Restfeuchtigkeit von 10,5 % verarbeitet.

### Beispiel 4a (Vergleichsbeispiel)

In einem 5 l Becherglas wurden 1,8 kg einer verdünnten Natriumaluminatlösung (4,0 % Al₂O₃, 5,5 Na₂O) vorgelegt. Unter intensivem Rühren wurde bei Raumtemperatur eine verd. Schwefelsäure (4,26 % SO₄, 0,45 % Al₂O₃) zudosiert, bis der pH-Wert auf 7,0 abgefallen war. Nach einer Nachrührzeit von 1 h wurde abfiltriert und der Filterkuchen mit Wasser ausgewaschen. Bezogen auf Trockensubstanz enthält das Produkt 60,9 % Al₂O₃, 8,4 SO₄, es lag ein Molverhältnis S/Al von 0,073 vor.

### Beispiel 4b (Vergleichsbeispiel)

In einem Becherglas wurden 0,8 kg einer verdünnten Natriumaluminatlösung (9,0 Al₂O₃, 13,95 % Na₂O) vorgelegt. Unter intensivem Rühren wurde bei 55 - 60 °C eine verd. Schwefelsäure (8,88 % SO₄, 1,00 % Al-₂O₃) zudosiert, bis der pH-Wert auf 7,0 abgefallen war. Nach einer Nachrührzeit von 1 h wurde abfiltriert und der Filterkuchen mit Wasser ausgewaschen. Bezogen auf Trockensubstanz enthält das Produkt 68 % Al-₂O₃, 1,49 % SO₄, es lag ein Molverhältnis S/A1 von 0,012 vor.

### Beispiel 5

In einem 10 l Becherglas wurden ca. 1,6 kg Natronlauge (Dichte 1,078 g/ml) vorgelegt. Bei Raumtemperatur wurden hierzu unter intensivem Rühren innerhalb von 60 min eine verdünnte Aluminiumsulfatlösung zudosiert (Dichte 1,051 g/ml) bis der pH-Wert auf 8,6 gefallen war. Nach 4 h Nachrührzeit wurde die Suspension abfiltriert und mit Wasser gewaschen. Der Filterkuchen enthielt 4,8 % Al₂O₃, 0,27 % SO₄, es lag ein Molverhältnis von S/Al von 0,03 vor.

### Beispiel 6

Festes Aluminiumsulfat mit einem Molverhältnis von S/Al von 1,47 wurde 4 h bei 800 °C im Muffelofen calciniert. Eine Analyse des Produkts ergab die folgende Zusammensetzung: w(Al) - 18,2 %; w(so₄ = 77,5 %. Das Molverhältnis von S/Al errechnet sich daraus zu 1,2.

**Tabelle 1**

| Reaktion auf pH-Wert Änderung | | | | |
|---|---|---|---|---|
| Substanz | MV(SO₄/Al) | vor NaOH Zugabe | nach NaOH Zugabe | |
| | | Ausgangswert | 1 min | 60 min |
| Suspension aus Beispiel 1 | 0,134 | 6,5 | 11,0 | 11,1 |
| Pulver aus Beispiel 2 | 0,12 | 6,9 | 11,4 | 11,3 |
| Pulver aus Beispiel 3 | 0,16 | 7.0 | 11,7 | 11,5 |
| Suspension aus Beispiel 4a | 0,073 | 6,6 | 12,3 | 12,1 |
| Suspension aus Beispiel 4b | 0,012 | 7,1 | 12,7 | 12,7 |
| Suspension aus Beispiel 5 | 0,03 | 7,1 | 13,0 | 12,8 |
| Pulver aus Beispiel 6 | 1,2 | 4,6 | 13,0 | 5,2 |

Die Eignung dieser Verbindungen als abbindebeschleunigende Zusätze in Zement wurde nach einem der Vorschrift DIN 1164 Teil 5 analogen Verfahren geprüft.

Eingesetzt wurden jeweils 290 g der Zement Type PZ 35 F (Heidelberger Zementwerke). Das Wasser/Zement Verhältnis lag einheitlich bei 0,41.

Die Menge an Abbindebeschleuniger gemäß der vorliegenden Erfindung wurde mit dem Anmaischwasser kurz verrührt, wobei der Feuchtigkeitsanteil als Wasser berücksichtigt wurde.

In diese Mischung wurde nun das Zementmehl eingetragen und 30 Sekunden mit einem Handrührgerät (600 UpM) homogenisiert und unmittelbar in den Hartgummiring (Vicat-Ring) eingebracht.

Die nachfolgende Tabelle gibt die erforderliche Einwaage an Beschleuniger an (bzgl Trockensubstanz), die nötig ist, den Abbindeanfang auf 2,3 + 0,25 min ab Miechbeginn zu beschleunigen.

**Tabelle 2**

| Vergleich der abbindebeschleunigenden Wirkung | | |
|---|---|---|
| Substanz bezgl Portl.zem.1 | MV(SO₄/Al) | erfolderliche Einwaage [Gew. %] für Abbindeanfang von 2,3 + 0,25 min |
| Filterkuchen aus Beispiel 1 | 0,134 | 0,76 |
| Produkt aus Beispiel 2 | 0,12 | 0,83 |
| Produkt aus Beispiel 3 | 0,27 | 0,70 |
| Produkt aus Beispiel 4a | 0,073 | 1,02 |
| Produkt aus Beispiel 4b | 0,012 | wirkt nicht beschleunigend |
| Produkt aus Beispiel 5 | 0,03 | wirkt nicht beschleunigend |
| Mischung nach EP 0 076 927 B1¹) | 0,11 | 1,49 |
| Mischung nach EP 0 076 927 B1¹) | 0,25 | 1,72 |

| | | |
|---|---|---|
| 1) Die Mischung wurde nach der EP 0 076 927 B1 aus amorphem Al(OH)₃ und Al₂(SO₄)₃ hergestellt. Die Mengenanteile wurden so gewählt, daß die Molverhältnisse SO₄/Al von 0,11 und 0,25 erhalten wurden. | | |

Die Prüfung der Festigkeiten wurde nach DIN 1164 Teil 7 durchgeführt.

**Tabelle 3**

| Einfluß der erfindungsgemäßen Verbindung auf die Festigkeitsentwicklung | | | | |
|---|---|---|---|---|
| Beschleuniger | Einwaage | Druckfestigkeit in (kp/cm²) nach | | |
| Typ | Gew. %Trockensubstanz bzgl. Zement | 1 Tag | 3 Tagen | 28 Tagen |
| - | ohne | 209 | 339 | 497 |
| | | | | |
| nach | 0,33 | 184 | 330 | 511 |
| EP 0 026 262 B1 | 0,82 | 129 | 321 | 503 |
| | | | | |
| nach | 0,39 | 214 | 297 | 476 |
| Beispiel 3 | 0,78 | 177 | 286 | 521 |

## Patentansprüche

1. Verwendung eines amorphen, basischen Aluminiumsulfates zum beschleunigten Abbinden und Erhärten eines hydraulischen Bindemittels, wie Zement, sowie daraus hergestelltem Mörtel und Beton, dadurch gekennzeichnet, daß das basische Aluminiumsulfat die folgende allgemeine Formel hat:
Al(OH)ₐ (SO₄)_{b}
und die Indices a und b die Bedingung
a = 3 - 2 b und b = 0,05 - 0,4 erfüllen, wobei
das amorphe basische Aluminiumsulfat als 0,5 Gew. % Al₂O₃ enthaltende homogenisierte Suspension in dest. Wasser nach Zugabe von 0,4 NaoH (bzgl. der Suspension) als konz. Lösung einen pH-Wert zeigt, der innerhalb von 60 Sekunden auf unter 11,8 abfällt.

2. Verwendung nach Anspruch 1, dadurch gekennzeichnet, daß das amorphe basische Aluminiumsulfat zusätzlich CO₃²⁻ enthalten kann.

3. Verwendung nach den Anspüchen 1 bis 2, dadurch gekennzeichnet, daß das amorphe, basische Aluminiumsulfat durch Mischen von verdünnten sulfathaltigen saueren Lösungen und alkalischen Lösungen im pH-Bereich von 5,0 - 8,0, vorzugsweise 6,5 - 7,5 und Ausfällen des Aluminiumsulfates bei Temperaturen unter 60 °C erhalten wird, und der Al-Gehalt dabei durch die sauere und/oder alkalische Komponente eingetragen wird.

4. Verwendung nach den Ansprüchen 1 bis 3, dadurch gekennzeichnet, daß der Al₂O₃ Gehalt der Fällungssuspension < 6 Al₂O₃ liegt.

5. Verwendung nach den Ansprüchen 1 bis 4, dadurch gekennzeichent, daß das gefällte amorphe, basische Aluminiumsulfat durch Filtration abgetrennt und gewaschen wird.

6. Verwendung nach den Ansprüchen 1 bis 5, dadurch gekennzeichnet, daß der Filterkuchen mit weiteren Hilfsstoffen homogenisiert und als Suspension eingesetzt wird.

7. Verwendung nach den Ansprüchen 1 bis 5, dadurch gekennzeichnet, daß der Filterkuchen mit einem Trockner auf eine Restfeuchte < 25 % abgetrocknet wird.

## Claims

1. Use of an amorphous basic aluminium sulphate for accelerated binding and hardening of a hydraulic binder such as cement, and mortars and concrete prepared therefrom, characterised in that the basic aluminium sulphate has the following general formula:
Al(OH)ₐ (SO₄)_{b}
and the indices a and b satisfy the terms
a = 3 - 2 b and b = 0.05 - 0.4, whilst
the amorphous basic aluminium sulphate in the form of a homogenised suspension in distilled water containing 0.5% by weight of AL₂O₃, after the addition of 0.4% NaOH (based on the suspension) in the form of a concentrated solution, has a pH which falls to below 11.8 within 60 seconds.

2. Use according to claim 1, characterised in that the amorphous basic aluminium sulphate may additionally contain CO₃²⁻.

3. Use according to claims 1 to 2, characterised in that the amorphous basic aluminium sulphate is obtained by mixing dilute, sulphate-containing acidic solutions and alkaline solutions in a pH range of from 5.0 - 8.0, preferably 6.5 - 7.5, and precipitating the aluminium sulphate at temperatures below 60°C, and the Al content is added by means of the acidic and/or alkaline component.

4. Use according to claims 1 to 3, characterised in that the Al₂O₃ content of the precipitation suspension is < 6% Al₂O₃.

5. Use according to claims 1 to 4, characterised in that the precipitated amorphous, basic aluminium sulphate is separated off by filtration and washed.

6. Use according to claims 1 to 5, characterised in that the filter cake is homogenised with other adjuvants and used in the form of a suspension.

7. Use according to claims 1 to 5, characterised in that the filter cake is dried with a dryer to a residue moisture content of < 25%.

## Revendications

1. Utilisation d'un sulfate d'aluminium basique amorphe pour accélérer la prise et le durcissement d'un liant hydraulique tel que du ciment, ainsi que du mortier et du béton préparés à partir de ce dernier, caractérisée en ce que le sulfate d'aluminium basique répond à la formule générale ci-après:
Al(OH)ₐ (SO₄)_{b}
les indices a et b répondant aux conditions ci-après:
a = 3 - 2 b et b = 0,05 - 0,4,
le sulfate d'aluminium basique amorphe présentant, sous forme d'une suspension homogénéisée dans de l'eau distillée contenant 0,5% en poids de Al₂O₃, après addition de 0,4% de NaOH (par rapport à la suspension) sous forme d'une solution concentrée, une valeur de pH qui tombe en dessous de 11,8 en 60 secondes.

2. Utilisation selon la revendication 1, caractérisée en ce que le sulfate d'aluminium basique amorphe peut contenir, en outre, CO₃²⁻.

3. Utilisation selon les revendications 1 à 2, caractérisée en ce que l'on obtient le sulfate d'ammonium basique amorphe par mélange de solutions acides sulfatées diluées et de solutions alcalines dans le domaine de pH de 5,0 - 8,0, de préférence de 6,5 - 7,5, et par précipitation du sulfate d'ammonium à des températures inférieures à 60°C, la teneur en Al étant introduite en l'occurrence par le composant acide et/ou alcalin.

4. Utilisation selon les revendications 1 à 3, caractérisée en ce que la teneur de la suspension de précipitation en Al₂O₃ se situe <6% de Al₂O₃.

5. Utilisation selon les revendications 1 à 4, caractérisée en ce qu'on sépare par filtration le sulfate d'aluminium basique amorphe précipité et on le lave.

6. Utilisation selon les revendications 1 à 5, caractérisée en ce qu'on homogénéise le gâteau de filtre avec d'autres adjuvants et on le met en oeuvre sous forme d'une suspension.

7. Utilisation selon les revendications 1 à 5, caractérisée en ce qu'on sèche le gâteau de filtre avec un dessiccateur pour obtenir une humidité résiduelle < 25%.
